## Europäisches Patentamt
## European Patent Office
## Office européen des brevets

(19)

(11) Numéro de publication: **0 086 903**
**B1**

(12) # FASCICULE DE BREVET EUROPEEN

(45) Date de publication du fascicule du brevet: **14.08.85**

(51) Int. Cl.⁴: **H 02 K 1/06, H 02 K 21/12**

(21) Numéro de dépôt: **82200189.7**

(22) Date de dépôt: **18.02.82**

(54) **Machines dynamoélectriques à double entrefer.**

(43) Date de publication de la demande:
**31.08.83 Bulletin 83/35**

(45) Mention de la délivrance du brevet:
**14.08.85 Bulletin 85/33**

(84) Etats contractants désignés:
**AT BE CH DE FR GB IT LI LU NL SE**

(56) Documents cités:
**DE - A - 2 823 256**
**DE - C - 962 911**
**FR - A - 2 337 458**

(73) Titulaire: **ATELIERS DE CONSTRUCTIONS ELECTRIQUES DE CHARLEROI (ACEC) Société Anonyme, Avenue Lloyd George 7, B-1050 Bruxelles (BE)**

(72) Inventeur: **Dacier, Jacques, Rue Vert Logis, 27, B-6101 Jamioulx (BE)**

ACTORUM AG

# Description

Depuis plusieurs années un intérêt croissant s'est manifesté dans la recherche de l'utilisation rationnelle des énergies disponibles en équipant notamment les basses chutes des rivières de plaine de centrales hydro-électriques munies de groupes bulbes. Ces groupes bulbes ont été choisis en raison de leur compacité conduisant à une économie importante des travaux de génie civil, à une plus grande simplicité de construction et de montage et aux formes régulières et continues des conduits hydrauliques contribuant à augmenter les performances hydrauliques de la turbine.

Ces groupes bulbes sont caractérisés par la position de l'alternateur monté au sein même de l'écoulement dans une bâche étanche à l'eau.

Dans la plupart des cas, la roue de turbine attaque directement l'alternateur dont le rotor est accouplé à l'arbre de la turbine par un croisillon comportant un moyeu creux et des bras radiaux supportant la jante sur laquelle sont adossées les pièces polaires. Souvent la virole du bulbe sert de carcasse au stator de l'alternateur dont le noyau magnétique est supporté par plusieurs pattes de fixation réparties régulièrement à la périphérie de la carcasse.

Dans ces réalisations, le diamètre extérieur maximal de la bâche est plus ou moins le même que celui de la roue motrice. Ce fait conduit à un taux de remplissage très faible de la partie interne du bulbe puisque les parties actives sont situées en périphérie et que le centre est occupé par les moyens de liaison entre la jante recouverte de pôles et l'arbre de la machine. La présente invention remédie à cette mauvaise utilisation de l'espace disponible à l'intérieur du bulbe en équipant la machine d'un second stator et un munissant le rotor d'un second jeu de pièces polaires.

La machine dynamo-électrique selon l'invention présente les caractéristiques contenues dans le préambule et la partie caractérisante de la revendication 1.

Cette machine comprend donc un rotor muni d'un premier jeu de pièces polaires fixées à la périphérie de la jante du rotor et appelées pièces polaires périphériques et d'un second jeu de pièces polaires fixées sur la partie interne de la jante et appelées pièces polaires internes.

Les pièces polaires périphériques défilent devant un premier stator dit stator périphérique dont la carcasse est la virole du bulbe. Les pièces polaires périphériques sont séparées du rotor périphérique par un premier entrefer dit entrefer périphérique.

Les pièces polaires internes défilent devant un second stator dit stator interne dont la carcasse est maintenue par une solide couronne entretoisée à la virole du bulbe. Les pièces polaires internes sont séparées du stator interne par un second entrefer dit entrefer interne.

En créant ainsi un second entrefer on augmente fortement la puissance de la machine pour un même encombrement, ou encore, à puissance égale, on réduit sensiblement le diamètre du bulbe.

Cette dernière possibilité offre un double intérêt; elle augmente le nombre de groupes disposés sur un même barrage et elle diminue le coût du génie civil grâce à un encombrement transversal réduit dû à la diminution de la longueur du bulbe pour conserver le même étranglement de la veine fluide.

Dans cette nouvelle réalisation, la jante, munie des deux jeux de pièces polaires: les pièces polaires périphériques et les pièces polaires internes, est soutenue en porte à faux par des bras obliques reliés au moyeu.

L'invention est davantage détaillée dans les figures suivantes:

La fig. 1 est une coupe représentant la disposition classique d'un alternateur de groupe bulbe.

La fig. 2 est une coupe d'un alternateur de même puissance réalisé selon l'invention revendiquée.

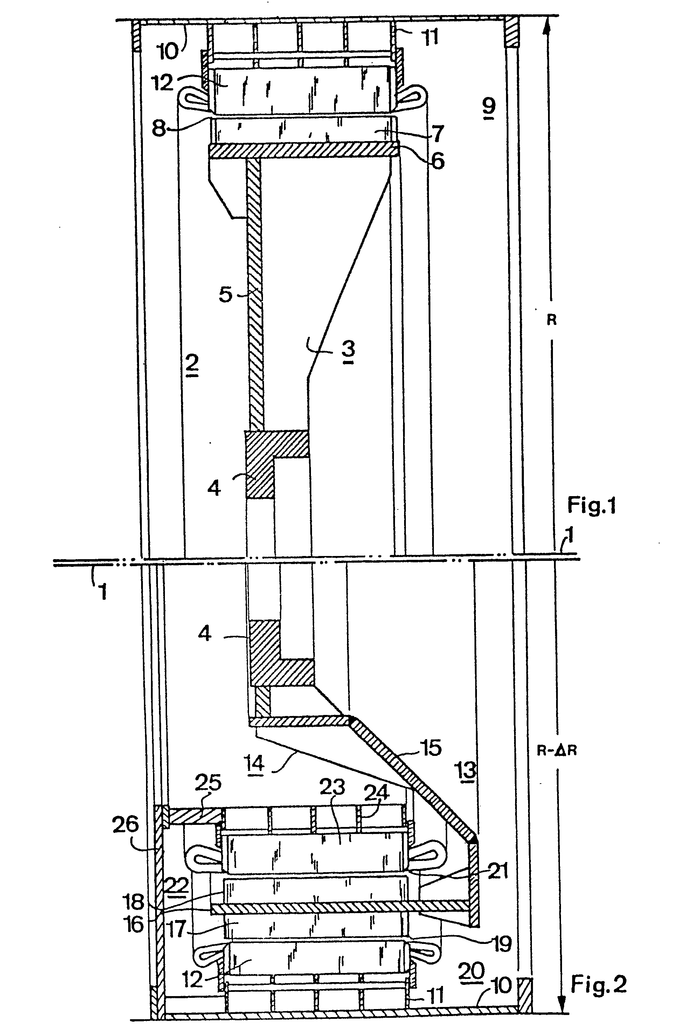

A la fig. 1, un axe 1 représente l'axe d'un arbre de turbine accouplé à un rotor 2 d'un alternateur par l'intermédiaire d'un croisillon 3 formé d'un moyeu creux 4 et de bras radiaux 5 solidarisés au moyeu 4. Les bras radiaux 5 servent de support à une jante 6 sur laquelle sont adossées des pièces polaires 7. Séparé par un entrefer 8, ce rotor 2 tourne dans un stator 9 constitué d'une carcasse 10 sur laquelle prennent appui une série de pattes de fixation 11 servant de support à un noyau magnétique 12.

Dans cet exemple de réalisation la carcasse 10 fait office de virole du groupe bulbe.

La fig. 2 représente un exemple de réalisation d'un alternateur à double entrefer tel que selon l'invention.

Dans cette fig. 2, l'axe 1 de l'arbre de la turbine est accouplé à un rotor 13 composé d'un croisillon 14 formé d'un moyeu creux 4 et de bras obliques 15 soutenant, en porte à faux, une jante 16 sur laquelle sont fixés, côté externe, un premier jeu de pièces polaires dites pièces polaires périphériques 17 et, côté interne, un second jeu de pièces polaires dites pièces polaires internes 18.

Séparées par un entrefer périphérique 19, les pièces polaires périphériques 17 défilent devant un premier stator bobiné appelé stator périphérique 20 dont le noyau magnétique 12 prend appui sur la virole 10 faisant office de carcasse par l'intermédiaire de pattes de fixation 11.

De même, les pièces polaires internes 18 séparées par un entrefer interne 21 défilent devant un second stator appelé stator interne 22 comportant un noyau magnétique 23 adossé par l'intermédiaire de pattes de fixation 24 à une carcasse interne 25 reliée elle-même à la virole 10 par l'intermédiaire d'une couronne entretoise 26.

Les pièces polaires périphétiques 17 et les pièces polaires internes 18 adossées de part et d'autre de la jante 16 sont fixées à celle-ci de manière que des pièces polaires de signe contraire soient disposées dos à dos pour obtenir un cheminement harmonieux du flux magnétique. Dans cette machine à double entrefer, le flux est donc radial dans ces pièces polaires internes 18, dans la jante 16 et dans les pièces polaires périphériques 17 et est tangentiel dans les noyaux magnétiques 12 et 23. Une réalisation conduisant à une application particulièrement économique de cette disposition à double entrefer est relative à un alternateur de groupe bulbe puisqu'elle entraîne une réduction de diamètre du groupe bulbe.

Cette nouvelle disposition peut aussi s'appliquer à des turbines Kaplan à axe vertical, dont la vitesse de rotation n'est pas trop élevée. Dans ce cas, l'axe de l'alternateur est lui aussi vertical et le stator interne 22 est monté sur site après la mise en place de la roue de turbine par enfilade à travers le stator périphérique 20.

Cette machine avec double stator offre l'avantage de pouvoir continuer à fonctionner si un incident survient sur un bobinage de l'un ou l'autre des deux stators.

La disposition faisant l'objet de cette invention s'applique évidemment à un groupe réversible tel qu'un alternateur-moteur accouplé à une turbine-pompe.

## Revendications

1. Machine dynamo-électrique composée d'un stator (20) formé d'un noyau magnétique bobiné (12) adossé à une carcasse (10) et d'un rotor (13) comportant des moyens de liaison (14) à un arbre de turbine et une jante (16) sur la face externe de laquelle sont fixées des pièces polaires (17) qui définissent avec le noyau magnétique (12) du stator (20) un entrefer (19), caractérisée en ce qu'un second jeu de pièces polaires (18) est fixé sur la face interne de la jante (16) du rotor (13) et en ce qu'un second stator (22) d'un diamètre plus petit appuyé sur une carcasse interne (25) est constitué d'un noyau magnétique bobiné (23) qui définit avec les pièces polaires internes (18) un second entrefer (21) dit entrefer interne.

2. Machine dynamo-électrique selon la revendication 1, caractérisée en ce que la carcasse interne (25) est reliée à la carcasse (10) par l'intermédiaire d'une couronne entretoise (26).

3. Machine dynamo-électrique selon une des revendications précédentes, caractérisée en ce que les pièces polaires (17 et 18) fixées en nombre égal de part et d'autre de la jante (16) sont disposées par paires suivant un même rayon, chaque paire étant constituée de deux pièces polaires de signe contraire.

## Patentansprüche

1. Dynamoelektrische Maschine aus einem Stator (20), der aus einem an einem Gehäuse (10) anliegenden gewickelten Magnetkern (12) und einem Rotor (13) besteht, wobei dieser Rotor (13) Verbindungsmittel (14) zu einer Turbinenwelle aufweist und mit einer Felge (16) versehen ist, auf deren äusserer Seite Polschuhe (17) befestigt sind, die mit dem Magnetkern (12) des Stators (20) einen Luftspalt (19) bilden, dadurch gekennzeichnet, dass ein zweiter Satz von Polschuhen (18) auf der inneren Fläche der Felge (16) des Rotors (13) befestigt ist, und dass ein zweiter Stator (22) von kleinerem Durchmesser, der an einem inneren Gehäuse (25) befestigt ist, aus einem gewickelten Magnetkern (23) besteht, der mit den inneren Polschuhen (18) einen zweiten Luftspalt (21) bildet, der innerer Luftspalt genannt wird.

2. Dynamoelektrische Maschine gemäss Anspruch 1, dadurch gekennzeichnet, dass das innere Gehäuse (25) über einen Abstandskranz (26) mit dem Gehäuse (10) verbunden ist.

3. Dynamoelektrische Maschine gemäss einem der vorhergehenden Ansprüche, dadurch gekennzeichnet, dass die in gleicher Anzahl zu beiden Seiten der Felge (16) befestigten Polschuhe (17 und 18) paarweise mit dem gleichen Radius angeordnet sind, wobei jedes Paar aus zwei Polschuhen von entgegengesetztem Vorzeichen besteht.

## Claims

1. Dynamo-electric machine comprising a stator (20) formed of a wound magnetic core (12) supported on a frame (10), and also a rotor (13), said rotor having means (14) connecting to a turbine shaft and also a rim (16) on the outer face of which there are secured pole pieces (17) which, with the magnetic core (12) of the stator (20), define an air gap (19), characterised in that a second of pole pieces (18) is fixed on the inner face of the rim (16) of the rotor (13) and in that a second stator (22) of a smaller diameter supported on an inner frame (25) is constituted by a wound magnetic core (23) which with the inner pole pieces (18) defines a second air gap (21) referred to as the inner air gap.

2. Dynamo-electric machine according to Claim 1, characterised in that the inner frame (25) is connected to the frame (10) by means of a spacer annulus (26).

3. Dynamo-electric machine according to one of the preceding claims, characterised in that the pole pieces (17 and 18) secured in equal numbers on the two sides of the rim (16) are arranged with each pair on one and the same radius, each pair being constituted by two pole pieces of opposite sign.

Fig.1

Fig.2